# EUROPEAN PATENT APPLICATION

(11) **EP 4 542 808 A1**
(43) Date of publication of application: **23.04.2025**
(21) Application number: 23205880.0
(22) Date of filing: 25.10.2023
(51) Int. Cl.: H02J 3/14, H02J 3/32, H02J 3/48, H02J 7/00, H02J 7/34, H02J 15/00

(54) **HYBRID ELECTROLYZER PLANT AND METHOD THEREFOR, MEDIUM AND COMPUTER PROGRAM PRODUCT**

(30) Priority: 16.10.2023 CN 202311336704
(71) Applicant: Hitachi Energy Ltd, 8050 Zürich (CH)
(72) Inventor: ZHANG, Weichi, Beijing 100015 (CN); JOHANSSON, Nicklas, 722 46 Västerås (SE); SVENSSON, Jan, 723 46 Västerås (SE); YUAN, ChunMing, Beijing 100062 (CN); JAYAN, Vijesh, 723 59 Västerås (SE); PAN, Jiuping, Raleigh 27606 (US)
(74) Representative: Vossius & Partner Patentanwälte Rechtsanwälte mbB

(57) **Abstract**

A hybrid electrolyzer plant, a method for operating a hybrid electrolyzer plant, a computer-readable storage medium and a computer program product are provided. The method for operating the hybrid electrolyzer plant comprises: in response to meeting a frequency response condition, determining a frequency response power, wherein the frequency response condition comprises at least one of: receiving a frequency regulation service order from a grid control center of the grid; and detecting a frequency disturbance of the grid; and based at least in part on responsive characteristics of the electrolyzer, distributing the frequency response power to the electrolyzer and the energy storage unit, so that the grid-connected active power of the hybrid electrolyzer plant is adjusted in consideration of the frequency response power.

## Description

### TECHNICAL FIELD

The present disclosure relates to a hybrid electrolyzer plant, a method for operating a hybrid electrolyzer plant, a computer-readable storage medium and a computer program product.

### BACKGROUND

As an environmentally friendly energy carrier, hydrogen can power a variety of applications, such as long-distance transportation (e.g., via heavy-load trucks, planes, ferries, etc.), steelmaking, and ammonia generation. Currently, water is electrolyzed in the electrolyzer plant to produce hydrogen.

However, the response of the electrolyzer in the electrolyzer plant is usually too slow to provide the grid auxiliary service as required by the grid operator, for example, the frequency response service.

In the prior art reference *"A Novel Multi-Scale Frequency Regulation Method of Hybrid Rectifier and Its Specific Application in Electrolytic Hydrogen Production",* an auxiliary converter is set between the grid connection point and the electrolyzer to compensate the rather slow response of the main converter connecting between the grid connection point and the electrolyzer. However, this prior art reference ignores the fact that the main reason that the electrolyzer plant fails to provide the rather fast response required by the grid operator is the rather slow response of the electrolyzer itself, instead of the main converter. Therefore, even the auxiliary converter is added as in the above-mentioned prior art reference, the problem that the electrolyzer plant fails to provide the rather fast response required by the grid operator cannot be solved.

The method described in this section is not necessarily a method that has been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

### SUMMARY

The present disclosure provides a hybrid electrolyzer plant, a method for operating a hybrid electrolyzer plant, a computer-readable storage medium and a computer program product.

According to an aspect of the present disclosure, a method for operating a hybrid electrolyzer plant is provided, wherein the hybrid electrolyzer plant includes an electrolyzer and an energy storage unit and coupled to a grid at a grid connection point. The method comprises: in response to meeting a frequency response condition, determining a frequency response power, wherein the frequency response condition comprises at least one of: receiving a frequency regulation service order from a grid control center of the grid; and detecting a frequency disturbance of the grid; and based at least in part on responsive characteristics of the electrolyzer, distributing the frequency response power to the electrolyzer and the energy storage unit, so that the grid-connected active power of the hybrid electrolyzer plant is adjusted in consideration of the frequency response power. According to some embodiments, the frequency response power corresponding to the frequency response can be distributed to the electrolyzer and the energy storage unit, enabling the energy storage unit to compensate the rather slow response of the electrolyzer, thereby enabling the grid-connected active power to reach rather fast frequency response required by the grid operator.

According to some embodiments, in response to meeting the frequency response condition, determining a frequency response power comprises: in response to meeting the frequency response condition at a response initiation timing, determining a responsive curve of the frequency response power according to at least one of the received frequency regulation service order and the frequency of the grid, wherein the responsive curve of the frequency response power changes by total committed power during a total ramping duration; and determining the frequency response power based on the responsive curve of the frequency response power and the time from the response initiation timing. According to some embodiments, different types of grid frequency regulation service can be realized according to at least one of the received frequency regulation service order and the frequency of the grid.

According to some embodiments, the responsive characteristics of the electrolyzer comprises a change rate of the active power of the electrolyzer. According to some embodiments, the distributing the frequency response power to the electrolyzer and the energy storage unit comprises: setting a first committed power based at least in part on the total committed power, wherein the first committed power is distributed to the electrolyzer, and a responsive curve of the active power of the electrolyzer changes by the first committed power during an electrolyzer ramping duration at the change rate of the active power of the electrolyzer; determining a second committed power based on the total committed power and the first committed power, wherein the second committed power is distributed to the energy storage unit; determining a change rate of the grid-connected active power based on the total committed power and the total ramping duration; determining a responsive curve of the active power of the energy storage unit based on the change rate of the grid-connected active power, the total ramping duration, the change rate of the active power of the electrolyzer, the electrolyzer ramping duration, and the second committed power; and setting active power of the energy storage unit based on the responsive curve of the active power of the energy storage unit and the time from the response initiation timing. According to some embodiments, the responsive curve of the active power of the energy storage unit can be set to compensate the rather slow change rate of the active power of the electrolyzer, which cannot satisfy the requirement of the grid alone.

According to some embodiments, the setting a first committed power based at least in part on the total committed power comprises at least one of the following: in response to an electricity price of the grid being larger than a price threshold, setting the first committed power based on the total committed power and the electricity price of the grid, wherein the first committed power is smaller than the total committed power; and in response to a state of charge of the energy storage unit being lower than a storage threshold, setting the first committed power as the total committed power. According to some embodiments, the economic efficiency of the hybrid electrolyzer plant and/or the balance of the SOC of the energy storage unit can be realized.

According to some embodiments, the determining a responsive curve of the active power of the energy storage unit based on the change rate of the grid-connected active power, the total ramping duration, the change rate of the active power of the electrolyzer, the electrolyzer ramping duration, and the second committed power comprises: determining a first change rate of the active power of the energy storage unit based on the change rate of the active power of the electrolyzer and the change rate of the grid-connected active power, wherein the first change rate is the change rate of the active power of the energy storage unit during the total ramping duration from the response initiation timing; determining a second change rate of the active power of the energy storage unit based on the change rate of the active power of the electrolyzer, wherein the second change rate is the change rate of the active power of the energy storage unit after the total ramping duration has elapsed during the electrolyzer ramping duration from the response initiation timing; and determining the responsive curve of the active power of the energy storage unit based on the total ramping duration, the electrolyzer ramping duration, the first change rate and the second change rate of the active power of the energy storage unit, and the second committed power. According to some embodiments, the change rate of the active power of the energy storage unit can be set to compensate the rather slow change rate of the active power of the electrolyzer.

According to some embodiments, the method for operating a hybrid electrolyzer plant further comprises: in response to meeting a recovery condition at a recovery initiation timing, determining the frequency response power according to a recovery curve of the frequency response power, wherein the recovery condition comprises at least one of: detecting that a support duration has passed after the response initiation timing; receiving an end-of-service order; and detecting the frequency of the grid being within a frequency recovery range, wherein the recovery curve of the frequency response power recovers to the grid-connected active power of the hybrid electrolyzer plant at the response initiation timing from the recovery initiation timing at a recovery change rate and/or during a recovery duration. According to some embodiments, the end of the frequency response service can be performed, wherein the frequency response power can be determined according to the recovery curve of the frequency response power, thereby meeting the requirement of end of the frequency response service of the grid operator.

According to some embodiments, the detecting a frequency disturbance of the grid comprises: detecting the frequency disturbance of the grid based on at least one of a frequency of the grid, the amount of change of the frequency of the grid, and the rate of change of the frequency of the grid. According to some embodiments, the frequency disturbance of the grid can be detected accurately.

According to some embodiments, the detecting the frequency disturbance of the grid based on at least one of a frequency of the grid, the amount of change of the frequency of the grid, and the rate of change of the frequency of the grid comprises at least one of: detecting that the frequency of the grid is lower than a first frequency threshold; detecting that the frequency of the grid is higher than a second frequency threshold; detecting that the amount of change of the frequency of the grid is larger than a threshold of the amount of change; and detecting that the rate of change of the frequency of the grid is larger than a threshold of the rate of change. According to some embodiments, the frequency disturbance can be detected according to different criterions.

According to some embodiments, the method for operating a hybrid electrolyzer plant further comprises: in response to that the frequency response condition has not been met after start of the hybrid electrolyzer plant or the frequency response power has recovered to the grid-connected active power of the hybrid electrolyzer plant at the response initiation timing, setting the active power of the energy storage unit according to at least one of an electricity price of the grid, hydrogen demand of the hybrid electrolyzer plant and a state of charge of the energy storage unit. According to some embodiments, the hybrid electrolyzer plant has operational flexibility to optimize hydrogen production and charging/discharging of integrated energy storage systems based on available information of market energy prices and/or the state of charge of energy storage unit.

According to some embodiments, the energy storage unit comprises a battery and a super capacitor, wherein the distributing the frequency response power to the electrolyzer and the energy storage unit further comprises: in response to a support duration corresponding to the frequency response condition being shorter than a duration threshold, distributing the active power of the energy storage unit to the super capacitor; and in response to the support duration corresponding to the frequency response condition being longer than or equal to a duration threshold, distributing the active power of the energy storage unit to the battery. According to some embodiments, the active power of the energy storage unit can be distributed to different types of energy storage unit according to the support duration.

According to some embodiments, the method for operating a hybrid electrolyzer plant further comprises: in response to detecting a voltage of the grid connection point being lower than a LVRT threshold, reducing active power of the electrolyzer to a lower limit of the active power of the electrolyzer, and setting the active power of the energy storage unit as the active power of the electrolyzer; and setting the grid-connected reactive power of the hybrid electrolyzer plant based on the voltage of the grid. According to some embodiments, the energy storage unit provides active power for the electrolyzer to maintain the operation of the electrolyzer, which ensures the reliability of the electrolyzer and avoids the long restart time of the electrolyzer; the active power of the electrolyzer is reduced to a lower limit, thereby reducing energy consumption of the energy storage unit; and the hybrid electrolyzer plant provides reactive power to the grid to support the grid.

According to some embodiments, the method for operating a hybrid electrolyzer plant further comprises: in response to detecting a voltage of the grid connection point being lower than a first voltage threshold or higher than a second voltage threshold, setting grid-connected reactive power of the hybrid electrolyzer plant based on the voltage of the grid, wherein the first voltage threshold is lower than the second voltage threshold. According to some embodiments, a reactive power versus voltage service can be provided by the hybrid electrolyzer plant.

According to some embodiments, the method for operating a hybrid electrolyzer plant further comprises: in response to detecting a power factor of the grid connection point being lower than a power factor threshold, setting grid-connected reactive power of the hybrid electrolyzer plant based on a power factor of the grid. According to some embodiments, the hybrid electrolyzer plant can provide high power factor operation.

According to another aspect of the present disclosure, A hybrid electrolyzer plant coupled to a grid is provided, wherein the hybrid electrolyzer plant comprises: an electrolyzer; an energy storage unit; and a plant controller configured to perform any of claims described in the present disclosure.

According to yet another aspect of the present disclosure, a computer-readable storage medium is provided, wherein the computer-readable storage medium has computer-readable instructions stored thereon, and when the computer-readable instructions are executed by a processor, the processor performs any of claims described in the present disclosure.

According to yet another aspect of the present disclosure, a computer program product is provided, which, when executed by a computer, cause the computer to perform any of claims described in the present disclosure.

The technical effects of the method discussed above can be applied to the hybrid electrolyzer plant, the computer-readable storage medium and the computer program product, and are therefore omitted herein.

It should be understood that the content described in this section is not intended to identify critical or important features of the embodiments of the present disclosure, and is not used to limit the scope of the present disclosure either. Other features of the present disclosure will be easily understood through the following specification.

### BRIEF DESCRIPTION OF THE DRAWINGS

The drawings exemplarily show embodiments and form a part of the specification, and are used to illustrate example implementations of the embodiments together with a written description of the specification. The embodiments shown are merely for illustrative purposes and do not limit the scope of the claims. Throughout the drawings, like reference signs denote like but not necessarily identical elements.
Fig. 1 is a schematic diagram illustrating a hybrid electrolyzer plant according to some embodiments of the present disclosure;
Fig. 2 is a flow chart illustrating the method for operating a hybrid electrolyzer plant according to some embodiments of the present disclosure;
Fig. 3 is a schematic diagram illustrating a responsive curve of frequency response power according to some embodiments of the present disclosure;
Fig. 4 is a flow chart illustrating the procedure of distributing the frequency response power to the electrolyzer and the energy storage unit in Fig.2 according to some embodiments of the present disclosure;
Figs. 5A-5B are schematic diagrams illustrating the distribution of the frequency response power to the electrolyzer and the energy storage unit;
Figs. 6A-6B are schematic diagrams illustrating the distribution of the frequency response power to the electrolyzer and the energy storage unit;
Figs. 7A-7B are schematic diagrams illustrating the distribution of the frequency response power to the electrolyzer and the energy storage unit; and
Fig. 8 is a schematic diagram illustrating a computing device that can be used in accordance with the methods disclosed herein.

### DETAILED DESCRIPTION OF THE EMBODIMENTS

The present disclosure will be further described in detail below with reference to the drawings and embodiments. It can be understood that embodiments described herein are used merely to explain a related disclosure, rather than limit the disclosure. It should be additionally noted that, for ease of description, only parts related to the related disclosure are shown in the drawings.

It should be noted that the embodiments in the present disclosure and features in the embodiments can be combined with each other without conflict. If the number of elements is not specifically defined, there may be one or more elements, unless otherwise expressly indicated in the context. In addition, numbers of steps or functional modules used in the present disclosure are used merely to identify the steps or functional modules, rather than limit either a sequence of performing the steps or a connection relationship between the functional modules. As used herein, the term "and/or" includes any and all combinations of one or more of the associated listed items. The term "based on" is to be construed as "based at least in part on".

Currently, the grid operator may require the electrolyzer plant to provide the grid auxiliary service, for example, the frequency response service. In particular, frequency response service requires the electrolyzer plant to provide active power support for the grid by quickly adjusting (i.e., increasing or decreasing) its active power demand to help the grid go through the frequency disturbance. However, the response of the electrolyzer in the electrolyzer plant is usually too slow to meet the rather fast response required by the grid operator.

To solve the above problem, the present disclosure provides a method for operating a hybrid electrolyzer plant, wherein the hybrid electrolyzer plant includes an electrolyzer and an energy storage unit and coupled to a grid at a grid connection point, and the method comprises: in response to meeting a frequency response condition, determining a frequency response power, wherein the frequency response condition comprises at least one of: receiving a frequency regulation service order from a grid control center of the grid and detecting a frequency disturbance of the grid; and based at least in part on responsive characteristics of the electrolyzer, distributing the frequency response power to the electrolyzer and the energy storage unit, so that the grid-connected active power of the hybrid electrolyzer plant is adjusted in consideration of the frequency response power.

In addition, the present disclosure provides a hybrid electrolyzer plant coupled to a grid, comprising: an electrolyzer; an energy storage unit; and a plant controller configured to perform any of the methods in the present disclosure.

According to some embodiments, the frequency response power corresponding to the frequency response can be distributed to the electrolyzer and the energy storage unit, enabling the energy storage unit to compensate the rather slow response of the electrolyzer, thereby enabling the grid-connected active power to reach rather fast frequency response required by the grid operator.

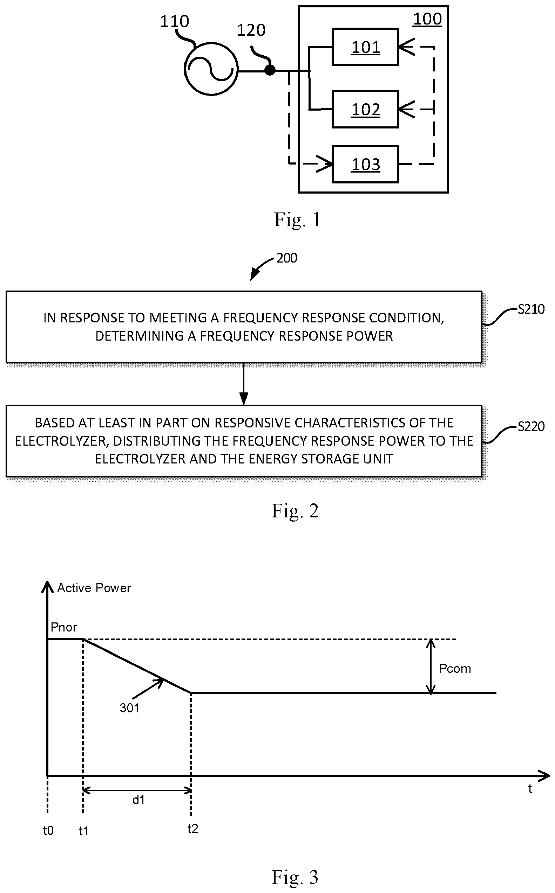

Fig. 1 is a schematic diagram illustrating a hybrid electrolyzer plant 100 according to some embodiments of the present disclosure.

As shown in Fig. 1, the hybrid electrolyzer plant 100 comprises an electrolyzer 101, an energy storage unit 102 and a plant controller 103. It should be understood that although Fig. 1 shows only one electrolyzer 101 and one energy storage unit 102, Fig. 1 is only for illustration, and the hybrid electrolyzer plant 100 can also include multiple electrolyzers 101 and/or energy storage units 102. For example, the hybrid electrolyzer plant 100 may include a plurality of electrolyzers 101 and a plurality of energy storage units 102.

In addition, as shown in Fig. 1, the hybrid electrolyzer plant 100 is coupled to the grid 110 at the grid connection point 120. According to some embodiments, the plant controller 103 detects the electrical parameters at grid connection point (for example, the frequency of the grid, the voltage of the grid) to perform control of the electrolyzer 101 and the energy storage unit 102.

According to some embodiments, each of the electrolyzer and the energy storage unit has a sub-controller, which receives control signals from the plant controller 103, for example, the active power control signal.

According to some embodiments, the energy storage unit 102 is integrated in the hybrid electrolyzer plant 100, i.e., the energy storage unit 102 becomes part of the hybrid electrolyzer plant 100, so that the energy storage unit 102 can provide the frequency response power required by the grid operator together with the electrolyzer 101. According to some embodiments, the electrolyzer 101 and energy storage unit 102 may be coupled to the grid 110 through a transformer and/or a power converter, for example, the electrolyzer 101 and the energy storage unit 102 may be connected to a bus (for example, DC bus or AC bus) through the corresponding power converters, and then connected to the grid 110 through a grid-connected transformer and/or a grid-connected converter. According to some embodiments, there may also exist multiple buses to improve the reliability and/or the volume of the hybrid electrolyzer plant. The presents disclosure is not intended to limit the specific connection between the electrolyzer 101 and the energy storage unit 102 in the hybrid electrolyzer plant 100 and the specific connection between the hybrid electrolyzer plant 100 and the grid 110.

Fig. 2 is a flow chart illustrating the method 200 for operating a hybrid electrolyzer plant according to some embodiments of the present disclosure. According to some embodiments, the method 200 can be used to operate the hybrid electrolyzer plant in the present disclosure (for example, the hybrid electrolyzer plant 100 in Fig. 1), wherein the hybrid electrolyzer plant comprises electrolyzer and energy storage unit, and is coupled to the grid.

As shown in Fig. 2, the method 200 comprises:
Step 210: in response to meeting a frequency response condition, determining a frequency response power, wherein the frequency response condition comprises at least one of: receiving a frequency regulation service order from a grid control center of the grid and detecting a frequency disturbance of the grid; and
Step S220: based at least in part on responsive characteristics of the electrolyzer, distributing the frequency response power to the electrolyzer and the energy storage unit, so that the grid-connected active power of the hybrid electrolyzer plant is adjusted in consideration of the frequency response power.

According to some embodiments, the frequency response service can be initiated according to meeting the frequency response condition corresponding to one criterion, for example:
Example 1: The plant controller receives a frequency regulation service order from the grid control center under normal grid frequency condition (e.g., grid frequency within the permissible normal frequency deviation range) or abnormal grid frequency condition (e.g., grid frequency outside the permissible normal frequency deviation range) and activates the instructed frequency response service.
Example 2: The plant controller detects a grid frequency disturbance (i.e., the amount of change of the grid frequency being larger than a threshold of amount of change, and/or the Rate of change of frequency (RoCoF) being larger than a threshold of rate of change) based on local measurements and activates corresponding frequency response service which does not need a service order from the grid control center due to very short activation time (e.g., less than 1 second).

According to some other embodiments, the frequency response service can be initiated according to meeting the frequency response condition corresponding to multiple criterions, for example, the frequency response service can be initiated in response to receiving the frequency regulation service order and detecting the frequency disturbance, thereby avoiding accidentally triggering the frequency response service.

According to some embodiments, the "frequency response condition" refers to the condition for determining whether to initiate the frequency response service.

According to some embodiments, the "electrolyzer" refers to the component that can use electricity to split water into hydrogen and oxygen, the "energy storage unit" refers to the component that can store energy and can output its stored energy when necessary, for example, super capacitor, battery, etc., and the "grid" refers to a network that providing electricity to the power consumer.

According to some embodiments, the frequency service provided by the hybrid electrolyzer plant can be Inertial Response, Frequency Restoration Reserves (FFRs), Frequency Containment Response (FCR), Automatic Frequency Restoration Reserve (aFRR), Balancing Energy and Balancing Capacity (mFRR), Reserve Restoration or Replacement Reserve (RR). According to some embodiments, the frequency service can be initiated according to the frequency service regulation order from the grid control center and /or the local frequency measurement at the hybrid electrolyzer plant.

According to some embodiments, the "frequency service regulation order" refers to the order from the grid control center that indicates a particular frequency service should be provided by the plant, and the particular frequency service defines the active power adjustment of the plant.

According to some embodiments, the "grid control center" refers to the control center of the grid controlling the power flow of the grid.

According to some embodiments, the "frequency response power" refers to the power that the hybrid electrolyzer plant is required to adjust in response to meeting a frequency response condition, thereby providing frequency regulation service.

According to some embodiments, the "responsive characteristics" of the electrolyzer is the characteristics reflecting the change rate of the active power of the electrolyzer when the active power of the electrolyzer changes from one value to another value.

According to some embodiments, the "grid-connected active power" refers to the active power at the grid connection point, wherein the grid-connected active power is positive when the active power flows from the grid to the hybrid electrolyzer plant, and the grid-connected active power is negative when the active power from the hybrid electrolyzer plant to the grid.

According to some embodiments, the "active power of the electrolyzer" refers to the active power consumed by the electrolyzer.

According to some embodiments, the "active power of the energy storage unit" refers to the active power charged or discharged by the energy storage unit, wherein the active power of the energy storage unit is positive when the energy storage unit is discharging, and the active power of the energy storage unit is negative when the energy storage unit is charging.

According to some embodiments, the detecting a frequency disturbance of the grid comprises at least one of the followings: detecting the frequency disturbance of the grid based on at least one of a frequency of the grid, the amount of change of the frequency of the grid, and the rate of change of the frequency of the grid. According to some embodiments of the present disclosure, the frequency disturbance of the grid can be detected accurately.

According to some embodiments, the amount of change of the frequency of the grid is calculated based on the measured frequency of the grid and the base frequency of the grid, i.e., the difference between the measured frequency of the grid and the base frequency of the grid. According to some embodiments, the rate of change of the frequency of the grid can be calculated as the time derivative of the power system frequency, i.e., the RoCoF.

According to some embodiments, the detecting the frequency disturbance of the grid based on at least one of a frequency of the grid, the amount of change of the frequency of the grid, and the rate of change of the frequency of the grid comprises at least one of: detecting that the frequency of the grid is lower than a first frequency threshold; detecting that the frequency of the grid is higher than a second frequency threshold; detecting that the amount of change of the frequency of the grid is larger than a threshold of the amount of change; and detecting that the rate of change of the frequency of the grid is larger than a threshold of the rate of change. According to some embodiments of the present disclosure, the frequency disturbance can be detected according to different criterions.

According to some embodiments, in response to meeting the response condition, determining a frequency response power comprises: in response to meeting the at least one frequency response condition at a response initiation timing, determine a responsive curve of the frequency response power according to at least one of the received frequency regulation service order and the frequency of the grid, wherein the responsive curve of the frequency response power changes by total committed power during a total ramping duration; and determining the frequency response power based on the responsive curve of the frequency response power and the time from the response initiation timing. According to some embodiments, different types of grid regulation frequency service can be realized according to at least one of the received frequency regulation service order and the frequency of the grid.

According to some embodiments, the grid frequency regulation service provided by the hybrid electrolyzer plant can be in different time scales.

According to some embodiments, the "response initiation timing" refers to the timing that the frequency response initiates, i.e., the time that the frequency response condition is met.

According to some embodiments, the "total committed power" refers to the power that the hybrid electrolyzer plant commits to adjust according to the contract.

According to some embodiments, the "total ramping duration" refers to the duration that the active power of the hybrid electrolyzer plant changes by the total committed power.

Fig. 3 is a schematic diagram illustrating the responsive curve of the frequency response power 301.

At timing t0, the hybrid electrolyzer plant is in the normal working mode, and the active power of the hybrid electrolyzer plant is Pnor.

At timing t1, the frequency response service initiates, and the active power of the hybrid electrolyzer plant starts to change from Pnor.

At timing t2, the active power of the hybrid electrolyzer plant reduces by the total committed power Pcom after the total ramping duration d1 has elapsed after timing 11.

According to some embodiments, the responsive characteristics of the electrolyzer comprises a change rate of the active power of the electrolyzer. It should be understood that the responsive characteristics of the electrolyzer may comprise other similar parameters that can reflect the responsive rate of the active power of the electrolyzer, for example, the time for the output power of the electrolyzer to change from one value to another value.

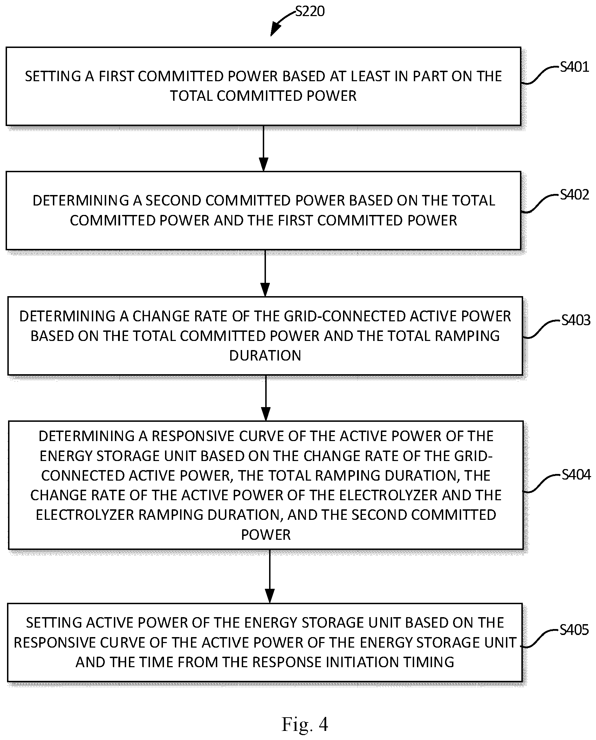

Fig. 4 is a flow chart illustrating the procedure of distributing the frequency response power to the electrolyzer and the energy storage unit in Fig.2 (for example, Step S220 in Fig. 2) according to some embodiments of the present disclosure. According to some embodiments, Step 220 comprises:
S401: setting a first committed power based at least in part on the total committed power, wherein the first committed power is distributed to the electrolyzer, and a responsive curve of the active power of the electrolyzer changes by the first committed power during an electrolyzer ramping duration at the change rate of the active power of the electrolyzer.

According to some embodiments, the total committed power can be distributed to the electrolyzer, thereby simplifying the control mechanism. According to some embodiments, the total committed power can be distributed between the electrolyzer and the energy storage, wherein the first committed power is distributed to the electrolyzer, and the second committed power is distributed to the energy storage unit.

According to some embodiments, the distribution of the total committed power can be performed based on the electricity price of the grid and/or the state of charge (SOC) of the energy storage unit. According to some embodiments, the setting a first committed power based at least in part on the total committed power comprises at least one of the following: in response to an electricity price of the grid being larger than a price threshold, setting the first committed power based on the total committed power and the electricity price of the grid, wherein the first committed power is smaller than the total committed power; and in response to a state of charge of the energy storage unit being lower than a storage threshold, setting the first committed power as the total committed power. According to some embodiments of the present disclosure, the economic efficiency of the hybrid electrolyzer plant and/or the balance of the SOC of the energy storage unit can be realized.

S402: determining a second committed power based on the total committed power and the first committed power, wherein the second committed power is distributed to the energy storage unit.

According to some embodiments, the second committed power is set as the difference between the total committed power and the first committed power. According to other embodiments, the second committed power can be set larger than the difference between the total committed power and the first committed power, so that it can be ensured that the hybrid electrolyzer plant meets the requirement of the frequency response in consideration of the measurement deviation and control deviation.

S403: determining a change rate of the grid-connected active power based on the total committed power and the total ramping duration.

The change rate of the grid-connected active power is the slope of the grid-connected active power during the total ramping duration (for example, the duration from the timing t1 to the timing t2.

S404: determining a responsive curve of the active power of the energy storage unit based on the change rate of the grid-connected active power, the total ramping duration, the change rate of the active power of the electrolyzer, the electrolyzer ramping duration and the second committed power.

As mentioned above, the change rate of the active power of the electrolyzer is smaller than the change rate of the frequency response power. As the result, the electrolyzer ramping duration, i.e., the duration for the active power of the electrolyzer to change by the first committed power, is usually longer than the total ramping duration. Therefore, the demand for the energy storage unit may differs in different in the following three stages of frequency response service: 1) the first stage from the response initiation timing to the timing that the grid-connected active power changes by the total committed power; 2) the second stage from the timing that the grid-connected active power changes by the total committed power to the timing that the active power of the electrolyzer changes by the first committed power; and 3) the third stage from the timing that the active power of the electrolyzer changes by the first committed power to the end of the frequency response service.

According to some embodiments, determining a responsive curve of the active power of the energy storage unit based on the change rate of the grid-connected active power, the total ramping duration, the change rate of the active power of the electrolyzer and the electrolyzer ramping duration comprises:
determining a first change rate of the active power of the energy storage unit based on the change rate of the active power of the electrolyzer and the change rate of the grid-connected active power, wherein the first change rate is the change rate of the active power of the energy storage unit during the total ramping duration from the response initiation timing;
determining a second change rate of the active power of the energy storage unit based on the change rate of the active power of the electrolyzer, wherein the second change rate is the change rate of the active power of the energy storage unit after the total ramping duration has elapsed during the electrolyzer ramping duration from the response initiation timing; and
determining the responsive curve of the active power of the energy storage unit based on the total ramping duration, the electrolyzer ramping duration, and the first change rate, the second change rate of the active power of the energy storage unit, and the second committed power.

According to some embodiments, the first change rate of the active power of the energy storage unit is the change rate of the above-mentioned first stage of frequency response service, wherein the first rate can be set as the difference between the change rate of the grid-connected active power and the change rate of the active power of the electrolyzer, or be set larger than the difference between the change rate of the grid-connected active power and the change rate of the active power of the electrolyzer so that a faster frequency response can be provided by the hybrid electrolyzer plant.

According to some embodiments, the second change rate of the active power of the energy storage unit is the change rate of the above-mentioned second stage of frequency response service, wherein the second change rate can be set as the negative of the change rate of the active power of the electrolyzer, or be set smaller than the negative of the change rate of the active power of the electrolyzer, so that it can be ensured that the hybrid electrolyzer plant meets the requirement of the frequency response in consideration of the measurement deviation and control deviation.

S405: setting active power of the energy storage unit based on the responsive curve of the active power of the energy storage unit and the time from the response initiation timing.

According to some embodiments, when the responsive curve of the active power of the energy storage unit is determined, the function of the active power of the energy storage unit versus the time from the response initiation timing can be determined as well.

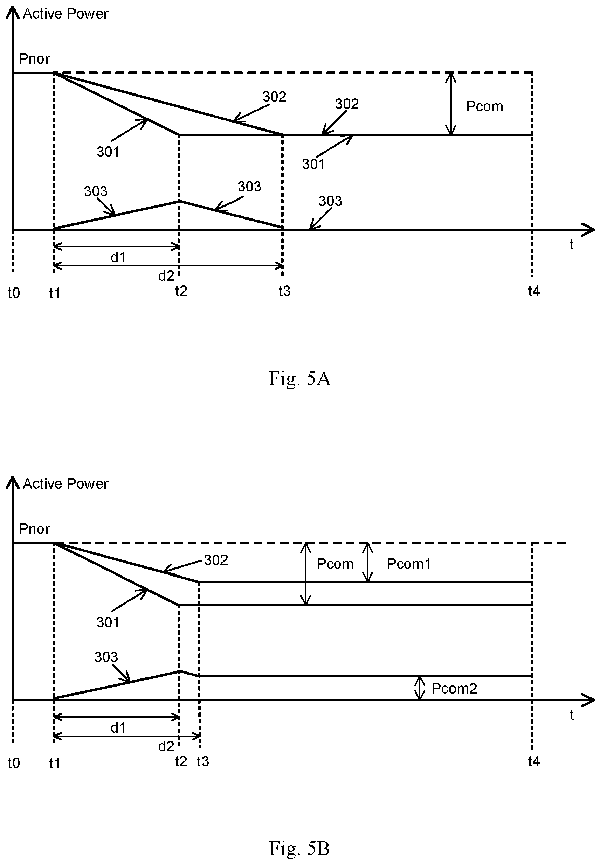

Figs. 5A-5B are schematic diagrams illustrating the distribution of the frequency response power to the electrolyzer and the energy storage unit. In Figs. 5A-5B, the curve 301 is the responsive curve of the frequency response power, the curve 302 is the responsive curve of the active power of the electrolyzer and the curve 303 is the responsive curve of the active power of the energy storage unit, d1 is the total ramping duration, d2 is the electrolyzer ramping duration, Pnom is the grid-connected active power in the normal operation mode, and Pcom is the total committed power.

Fig. 5A illustrates the situation that the total committed power is the equal to the first committed power (for example, in the case that the state of charge of the energy storage unit is lower than a storage threshold), so that the curve 301 (i.e., the responsive curve of the frequency response power) and the curve 302 (i.e., the responsive curve of the active power of the energy storage unit) overlaps with each other at the stable state (i.e., after the timing t3).

In particular, at the timing t0, the hybrid electrolyzer plant is in the normal working mode, and the active power of the hybrid electrolyzer plant is Pnor, and the active power of the energy storage unit is zero. It should be understood that the active power of the energy storage unit can be a nonzero value, for example, when the electricity price at the timing t0 is larger than a price threshold, the energy storage unit can be discharging at the active power Pen at the timing t0, and the active power of the energy storage unit during the frequency response service can be adjusted from this nonzero value.

At timing t1, the frequency response service initiates, and the active power of the hybrid electrolyzer plant starts to change from Pnor, wherein the first changing rate of the energy storage unit can be calculated based on the change rate of the grid-connected active power and the change rate of the active power of the electrolyzer so that the energy storage unit increases its output power to meet the requirement of the frequency response service.

At timing t2, the active power of the hybrid electrolyzer plant reduces by the total committed power Pcom after the total ramping duration d1 has elapsed after timing t1, but the active power reduction of the electrolyzer has not reached the total committed power Pcom, wherein the second changing rate of the energy storage unit can be calculated based on the change rate of the active power of the electrolyzer so that the energy storage unit continues to compensate the difference between the change amount of the active power of the electrolyzer and the total committed power.

At timing t3, both the active power reduction of the hybrid electrolyzer plant and the active power reduction of the electrolyzer have reached the total committed power, and the active power of the energy storage unit has returned to zero.

At timing t4, both the active power reduction of the hybrid electrolyzer plant and the active power reduction of the electrolyzer have maintained the total committed power, and the active power of the energy storage unit has maintained zero.

Fig. 5B illustrates the situation that the total committed power is not equal to the first committed power (for example, in the case that the electricity price of the grid is larger than a price threshold), so that the curve 301 (i.e., the responsive curve of the frequency response power) and the curve 302 (i.e., the responsive curve of the active power of the energy storage unit) does not overlap with each other at the stable state (i.e., after the timing t3).

In particular, at the timing t0, the hybrid electrolyzer plant is in the normal working mode, and the active power of the hybrid electrolyzer plant is Pnor, and the active power of the energy storage unit is zero. It should be understood that the active power of the energy storage unit can be a nonzero value, for example, when the electricity price at the timing t0 is larger than a price threshold, the energy storage unit can be discharging at the active power Pen at the timing t0, and the active power of the energy storage unit during the frequency response service can be adjusted from this nonzero value.

At timing t1, the frequency response service initiates, and the active power of the hybrid electrolyzer plant starts to change from Pnor, wherein the first changing rate of the energy storage unit can be calculated based on the change rate of the grid-connected active power and the change rate of the active power of the electrolyzer so that the energy storage unit increases its output power to meet the requirement of the frequency response service.

At timing t2, the active power of the hybrid electrolyzer plant reduces by the total committed power Pcom after the total ramping duration d1 has elapsed after timing t1, but the active power reduction of the electrolyzer has not reached the first committed power Pcom 1, wherein the second changing rate of the energy storage unit can be calculated based on the change rate of the active power of the electrolyzer so that the energy storage unit continues to compensate the difference between the active power of the electrolyzer and the frequency response power.

At timing t3, the active power reduction of the hybrid electrolyzer plant maintains the total committed power Pcom, the active power reduction of the electrolyzer reaches the first committed power Pcom1, and the active power of the energy storage reduces by the second committed power Pcom2.

At timing t4, the active power reduction of the hybrid electrolyzer plant maintains the total committed power Pcom, the active power reduction of the electrolyzer maintains the first committed power Pcom 1, and the active power of the energy storage unit maintains the second committed power Pcom2.

According to some embodiments, the frequency response service ends when the frequency disturbance ends and /or the grid control center requires the hybrid electrolyzer plant to stop the frequency response service.

According to some embodiments, the method for operation the hybrid electrolyzer plant further comprises: in response to meeting a recovery condition at a recovery initiation timing, determining the frequency response power according to a recovery curve of the frequency response power, wherein the recovery condition comprises at least one of: detecting that a support duration has passed after the response initiation timing; receiving an end-of-service order; and detecting the frequency of the grid being within a frequency recovery range, wherein the recovery curve of the frequency response power recovers to the grid-connected active power of the hybrid electrolyzer plant at the response initiation timing from the recovery initiation timing at a recovery change rate and/or during a recovery duration. According to some embodiments of the present disclosure, the end of the frequency response service can be performed, wherein the frequency response power can be determined according to the recovery curve of the frequency response power, thereby meeting the requirement of end of the frequency response service of the grid operator.

According to some embodiments, the "recovery condition" is the condition for determining whether to recover from the frequency response service to the normal operation mode.

According to some embodiments, the "recovery initiation timing" refers to the timing that the hybrid electrolyzer plant starts to recover from the frequency response, i.e., the time that the recovery condition is met.

According to some embodiments, after determining the frequency response power according to the recovery curve of the frequency response power, distributing the frequency response power to the electrolyzer and the energy storage unit, so that the grid-connected active power of the hybrid electrolyzer plant is adjusted in consideration of the frequency response power.

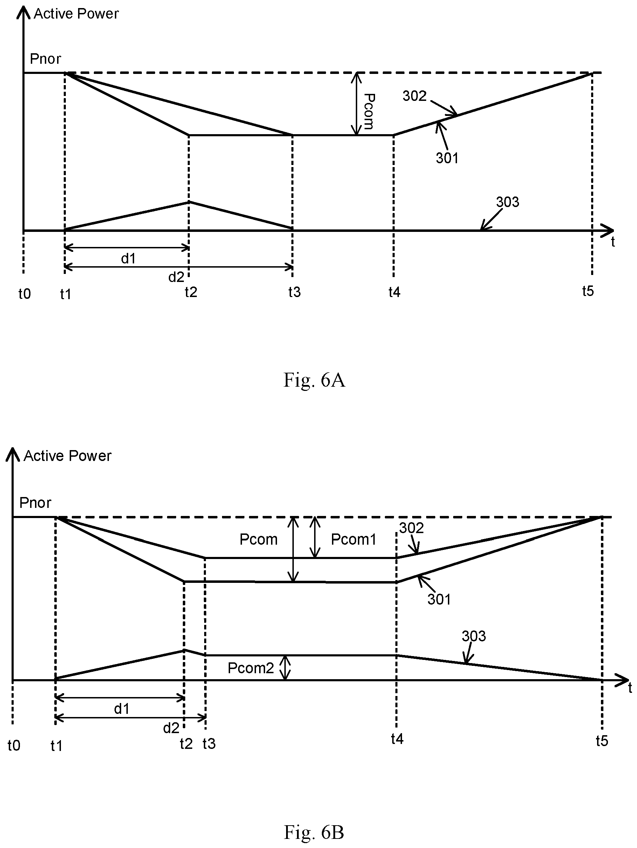

Figs. 6A-6B are schematic diagrams illustrating the distribution of the frequency response power to the electrolyzer and the energy storage unit. Similar to Figs. 5A-5B, in Figs. 6A-6B, the curve 301 is the responsive curve of the frequency response power, the curve 302 is the responsive curve of the active power of the electrolyzer and the curve 303 is the responsive curve of the active power of the energy storage unit, d1 is the total ramping duration, d2 is the electrolyzer ramping duration, Pnom is the grid-connected active power in the normal operation mode, and Pcom is the total committed power.

In case that the total committed power is equal to first committed power, the frequency response power is distributed to the electrolyzer, so that the active power adjustment of the electrolyzer is equal to the frequency response power. Fig.6A illustrates the distribution of the frequency response power to the electrolyzer and the energy storage unit in case that the total committed power is equal to the first committed power.

Fig. 6A differs from Fig. 5A in that the hybrid electrolyze plant starts to recover from the frequency response service from the timing t4.

From the timing t4 to the timing t5, and the curves 301 and 302 overlaps with each other, i.e., the active power of the electrolyzer is equal to the frequency response power, and the curves 303 maintains zero, i.e., the active power of the energy storage unit maintains zero.

At the timing t5, the active power of the electrolyzer and the active power of the hybrid electrolyzer plant has recovered to Pnom, and the hybrid electrolyzer plant has recovered from the frequency response service.

In case that the total committed power is not equal to first committed power, the frequency response power is distributed between the electrolyzer and the energy storage unit. Fig. 6B illustrates the distribution of the frequency response power to the electrolyzer and the energy storage unit in case that the total committed power is not equal to the first committed power.

Fig. 6B differs from Fig. 5B in that the hybrid electrolyze plant starts to recover from the frequency response service from the timing t4.

From the timing t4 to the timing t5, and the curves 301 and 302 does not overlap with each other, i.e., the active power of the electrolyzer is not equal to the frequency response power, and the curve 303 ramps from Pcom2 to zero, i.e., the active power of the energy storage unit ramps from Pcom2 to zero.

At the timing t5, the active power of the electrolyzer and the active power of the hybrid electrolyzer plant has recovered to Pnom, the active power of the energy storage unit has recovered to zero, and the hybrid electrolyzer plant has recovered from the frequency response service.

According to some embodiments, the frequency responses of the hybrid electrolyzer plant shown in Figs. 5A-5B and Figs. 6A-6B should be considered as minimum required performance, and the actual frequency response of the hybrid electrolyzer plant, with integrated energy storage, can reach to the committed frequency response power with a ramping duration shorter than the ones shown in Figs. 5A-5B and Figs. 6A-6B.

According to some embodiments, the hybrid electrolyzer plant can provide frequency response service to the grid through the Automatic Generation Control (AGC) system, which is a control function of the grid control center to adjust power outputs of generators and flexible loads, such that acceptable grid frequencies can be maintained against fluctuations in loads and variable resources during normal or abnormal grid frequency conditions. According to some embodiments, the hybrid electrolyzer plant can accurately track AGC control signals and optimize the response of the electrolyzer and the energy storage unit based on the electricity price of the grid and the hydrogen production need and other constraints.

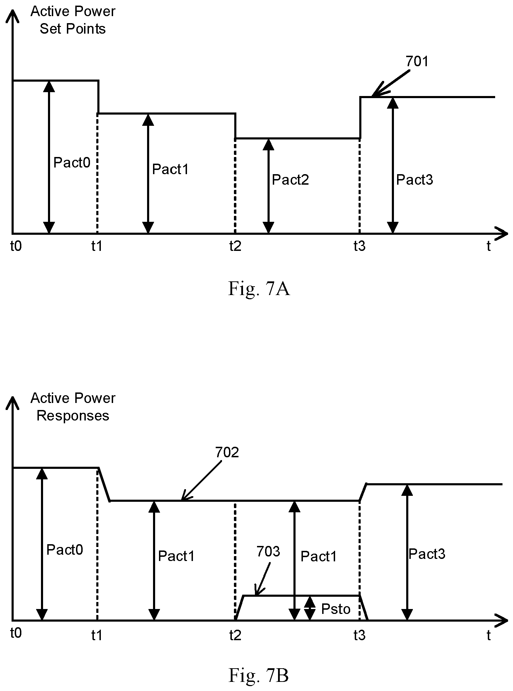

As an illustrative example, Figs. 7A-7B are schematic diagrams illustrating the distribution of the frequency response power to the electrolyzer and the energy storage unit.

At the timing t0, the active power of the hybrid power plant is Pact0, the active power of the electrolyzer is Pact0, and the active power of the energy storage unit is zero, which means the power compensate from the energy storage unit is not needed at the timing t0.

At the timing t1, in response to the active power of the hybrid power plant reducing to Pact1, the active power of the electrolyzer reduces to Pact1 as well, and the active power of the energy storage unit maintains zero.

At the timing t2, in response to the active power of the hybrid power plant reducing to Pact2, the active power of the electrolyzer maintains unchanged while the energy storage unit discharges at Psto, which equivalently reduces the active power of the hybrid electrolyzer plant.

At the timing t3, in response to the active power of the hybrid power plant increasing to Pact3, the active power of the energy storage unit changes to zero, which means the energy storage unit stops discharging to compensate the active power of the hybrid power plant, and the active power of the electrolyzer changes to the active power of the hybrid power plant Pact3.

According to some embodiments, the method for operating the hybrid electrolyzer plant further comprises: in response to that none of frequency response condition has been met after start of the hybrid electrolyzer plant or the frequency response power has recovered to the grid-connected active power of the hybrid electrolyzer plant at the response initiation timing, setting the active power of the energy storage unit according to at least one of an electricity price of the grid, hydrogen demand of the hybrid electrolyzer plant and a state of charge of the energy storage unit. According to some embodiments, the hybrid electrolyzer plant has operational flexibility to optimize hydrogen production and charging/discharging of integrated energy storage systems based on available information of market energy prices and/or the state of charge of energy storage unit.

For example, during low electricity price and low hydrogen demand hours, scheduled demand can be maintained by charging the energy storage unit. Similarly, during high electricity price and high hydrogen demand hours, scheduled demand can be maintained by discharging energy storage unit.

According to some embodiments, the energy storage unit comprises a battery and a super capacitor. According to some embodiments, distributing the frequency response power to the electrolyzer and the energy storage unit further comprises: in response to a support duration corresponding to the at least one frequency response condition being shorter than a duration threshold, distributing the active power of the energy storage unit to the super capacitor; and in response to the support duration corresponding to the at least one frequency response condition being longer than or equal to a duration threshold, distributing the active power of the energy storage unit to the battery.

According to some embodiments, the "support duration" refers to the duration of the frequency response service, for example, the duration from the timing t1 to the timing t5 in Figs. 6A-6B.

According to some embodiments, the active power of the energy storage unit can be distributed to different types of energy storage unit according to the support duration.

Currently, it is expected that the hybrid electrolyzer plant maintains producing hydrogen throughout the low-voltage period of the grid caused by grid fault. The hybrid electrolyzer plant exhibits low-voltage ride-through (LVRT) with the support of energy storage unit. According to some embodiments, the method for operating the electrolyzer plant further comprises: in response to detecting a voltage of the grid connection point being lower than a LVRT threshold, reducing active power of the electrolyzer to a lower limit of the active power of the electrolyzer, and setting the active power of the energy storage unit as the active power of the electrolyzer; and setting the grid-connected reactive power of the hybrid electrolyzer plant based on the voltage of the grid.

According to some embodiments, the energy storage unit provides active power for the electrolyzer to maintain the operation of the electrolyzer, which ensures the reliability of the electrolyzer and avoids the long restart time of the electrolyzer; the active power of the electrolyzer is reduced to a lower limit, thereby reducing energy consumption of the energy storage unit; and the hybrid electrolyzer plant provides reactive power to the grid to support the grid.

According to some embodiments, the method for operating the electrolyzer plant further comprises: in response to detecting a voltage of the grid connection point being lower than a first voltage threshold or higher than a second voltage threshold, setting reactive power of the hybrid electrolyzer plant based on the voltage of the grid, wherein the first voltage threshold is lower than the second voltage threshold. According to some embodiments of the present disclosure, a reactive power versus voltage service can be provided by the hybrid electrolyzer plant.

According to some embodiments, the method for operating the electrolyzer plant further comprises: in response to detecting a power factor of the grid connection point being lower than a power factor threshold, setting reactive power of the hybrid electrolyzer plant to compensate for power factor at grid connection point. According to some embodiments of the present disclosure, the hybrid electrolyzer can provide high power factor operation.

According to some embodiments, a computer-readable storage medium is provided, which has computer-readable instructions stored thereon, and when the computer-readable instructions are executed by a processor, the processor performs the method for operating the hybrid electrolyzer plant in the present disclosure.

According to some embodiments, a computer program product is provided, which comprises instructions which, when executed by a computer, cause the computer to perform the method for operating the hybrid electrolyzer plant in the present disclosure.

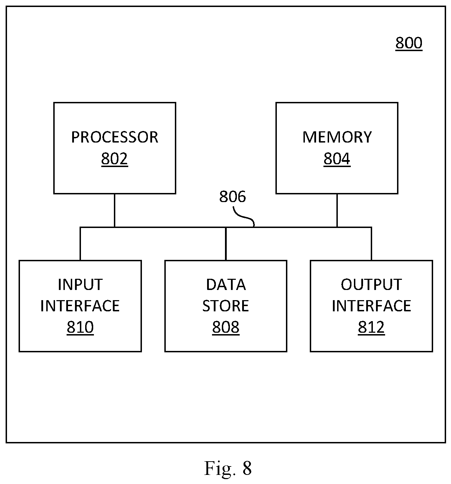

Referring now to FIG. 8, a high-level illustration of an exemplary computing device 800 that can be used in accordance with the methods disclosed herein is illustrated. The computing device 800 includes at least one processor 802 that executes instructions that are stored in a memory 804. The instructions may be, for instance, instructions for implementing functionality described as being carried out by one or more components discussed above or instructions for implementing one or more of the methods described above. The processor 802 may access the memory 804 by way of a system bus 806.

The computing device 800 additionally includes a data store 808 that is accessible by the processor 802 by way of the system bus 806. The data store 808 may include executable instructions, log data, etc. The computing device 800 also includes an input interface 810 that allows external devices to communicate with the computing device 800. For instance, the input interface 810 may be used to receive instructions from an external computer device, from a user, etc. The computing device 800 also includes an output interface 812 that interfaces the computing device 800 with one or more external devices. For example, the computing device 800 may display text, images, etc. by way of the output interface 812.

It is contemplated that the external devices that communicate with the computing device 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 800 may be a distributed system. Thus, for instance, several devices may be in communication by way of a network connection and may collectively perform tasks described as being performed by the computing device 800.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fibre optic cable, twisted pair, digital subscriber line (DSL), or wireless technologies such as infrared, radio, and microwave, then the coaxial cable, fibre optic cable, twisted pair, DSL, or wireless technologies such as infrared, radio and microwave are included in the definition of communication medium. Combinations of the above should also be included within the scope of computer-readable media. It should be understood that the computer program product can be stored on the non-transitory computer-readable storage medium or can be downloaded through the communication medium.

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes functions or operations, or may be implemented by a combination of dedicated hardware and computer instructions.

The foregoing descriptions are merely preferred embodiments of the present disclosure and explanations of the applied technical principles. Those skilled in the art should understand that the scope of the present disclosure involved in the embodiments of the present disclosure is not limited to the technical solutions formed by specific combinations of the foregoing technical features, and shall also cover other technical solutions formed by any combination of the foregoing technical features or equivalent features thereof without departing from the foregoing inventive concept. For example, a technical solution formed by a replacement of the foregoing features with technical features with similar functions in the technical features disclosed in the embodiments of the present disclosure (but not limited thereto) also falls within the scope of the present disclosure.

## Claims

1. A method (200) for operating a hybrid electrolyzer plant (100), wherein the hybrid electrolyzer plant (100) includes an electrolyzer (101) and an energy storage unit (102) and coupled to a grid (110) at a grid connection point (120), and the method comprises:
in response to meeting a frequency response condition, determining (S210) a frequency response power, wherein the frequency response condition comprises at least one of:
receiving a frequency regulation service order from a grid control center of the grid; and
detecting a frequency disturbance of the grid; and
based at least in part on responsive characteristics of the electrolyzer, distributing (S220) the frequency response power to the electrolyzer and the energy storage unit, so that the grid-connected active power of the hybrid electrolyzer plant is adjusted in consideration of the frequency response power.

2. The method according to claim 1, wherein in response to meeting a frequency response condition, determining (S210) a frequency response power comprises:
in response to meeting the frequency response condition at a response initiation timing, determining a responsive curve of the frequency response power according to at least one of the received frequency regulation service order and the frequency of the grid, wherein the responsive curve of the frequency response power changes by total committed power during a total ramping duration; and
determining the frequency response power based on the responsive curve of the frequency response power and the time from the response initiation timing.

3. The method according to claim 2, wherein the responsive characteristics of the electrolyzer comprises a change rate of the active power of the electrolyzer, and
the distributing (S220) the frequency response power to the electrolyzer and the energy storage unit comprises:
setting (S401) a first committed power based at least in part on the total committed power, wherein the first committed power is distributed to the electrolyzer, and a responsive curve of the active power of the electrolyzer changes by the first committed power during an electrolyzer ramping duration at the change rate of the active power of the electrolyzer;
determining (S402) a second committed power based on the total committed power and the first committed power, wherein the second committed power is distributed to the energy storage unit;
determining (S403) a change rate of the grid-connected active power based on the total committed power and the total ramping duration;
determining (S404) a responsive curve of the active power of the energy storage unit based on the change rate of the grid-connected active power, the total ramping duration, the change rate of the active power of the electrolyzer, the electrolyzer ramping duration, and the second committed power; and
setting (S405) active power of the energy storage unit based on the responsive curve of the active power of the energy storage unit and the time from the response initiation timing.

4. The method according to claim 3, wherein the setting (S401) a first committed power based at least in part on the total committed power comprises at least one of the following:
in response to an electricity price of the grid being larger than a price threshold, setting the first committed power based on the total committed power and the electricity price of the grid, wherein the first committed power is smaller than the total committed power; and
in response to a state of charge of the energy storage unit being lower than a storage threshold, setting the first committed power as the total committed power.

5. The method according to claim 3, wherein the determining (S404) a responsive curve of the active power of the energy storage unit based on the change rate of the grid-connected active power, the total ramping duration, the change rate of the active power of the electrolyzer the electrolyzer ramping duration, and the second committed power comprises:
determining a first change rate of the active power of the energy storage unit based on the change rate of the active power of the electrolyzer and the change rate of the grid-connected active power, wherein the first change rate is the change rate of the active power of the energy storage unit during the total ramping duration from the response initiation timing;
determining a second change rate of the active power of the energy storage unit based on the change rate of the active power of the electrolyzer, wherein the second change rate is the change rate of the active power of the energy storage unit after the total ramping duration has elapsed during the electrolyzer ramping duration from the response initiation timing; and
determining the responsive curve of the active power of the energy storage unit based on the total ramping duration, the electrolyzer ramping duration, the first change rate and the second change rate of the active power of the energy storage unit, and the second committed power.

6. The method according to any of claims 2-5, further comprising:
in response to meeting a recovery condition at a recovery initiation timing, determining the frequency response power according to a recovery curve of the frequency response power, wherein the recovery condition comprises at least one of:
detecting that a support duration has passed after the response initiation timing;
receiving an end-of-service order; and
detecting the frequency of the grid being within a frequency recovery range,
wherein the recovery curve of the frequency response power recovers to the grid-connected active power of the hybrid electrolyzer plant at the response initiation timing from the recovery initiation timing at a recovery change rate and/or during a recovery duration.

7. The method according to any of claims 1-6, wherein the detecting a frequency disturbance of the grid comprises:
detecting the frequency disturbance of the grid based on at least one of a frequency of the grid, the amount of change of the frequency of the grid, and the rate of change of the frequency of the grid.

8. The method according to claim 7, wherein the detecting the frequency disturbance of the grid based on at least one of a frequency of the grid, the amount of change of the frequency of the grid, and the rate of change of the frequency of the grid comprises at least one of:
detecting that the frequency of the grid is lower than a first frequency threshold;
detecting that the frequency of the grid is higher than a second frequency threshold;
detecting that the amount of change of the frequency of the grid is larger than a threshold of the amount of change; and
detecting that the rate of change of the frequency of the grid is larger than a threshold of the rate of change.

9. The method according to claim 6, further comprising:
in response to that the frequency response condition has not been met after start of the hybrid electrolyzer plant or the frequency response power has recovered to the grid-connected active power of the hybrid electrolyzer plant at the response initiation timing, setting the active power of the energy storage unit according to at least one of an electricity price of the grid, hydrogen demand of the hybrid electrolyzer plant and a state of charge of the energy storage unit.

10. The method according to claim 3, wherein the energy storage unit comprises a battery and a super capacitor, wherein the distributing the frequency response power to the electrolyzer and the energy storage unit further comprises:
in response to a support duration corresponding to the frequency response condition being shorter than a duration threshold, distributing the active power of the energy storage unit to the super capacitor; and
in response to the support duration corresponding to the frequency response condition being longer than or equal to a duration threshold, distributing the active power of the energy storage unit to the battery.

11. The method according to any of claims 1-10, further comprising:
in response to detecting a voltage of the grid connection point being lower than a LVRT threshold, reducing active power of the electrolyzer to a lower limit of the active power of the electrolyzer, and setting the active power of the energy storage unit as the active power of the electrolyzer; and
setting the grid-connected reactive power of the hybrid electrolyzer plant based on the voltage of the grid.

12. The method according to any of claims 1-11, further comprising:
in response to detecting a voltage of the grid connection point being lower than a first voltage threshold or higher than a second voltage threshold, setting grid-connected reactive power of the hybrid electrolyzer plant based on the voltage of the grid, wherein the first voltage threshold is lower than the second voltage threshold;
or
in response to detecting a power factor of the grid connection point being lower than a power factor threshold, setting grid-connected reactive power of the hybrid electrolyzer plant based on a power factor of the grid.

13. A hybrid electrolyzer plant coupled to a grid, comprising:
an electrolyzer;
an energy storage unit; and
a plant controller configured to perform any of claims 1-12.

14. A computer-readable storage medium having computer-readable instructions stored thereon, when the computer-readable instructions are executed by a processor, the processor performs any of claims 1-12.

15. A computer program product comprising instructions which, when executed by a computer, cause the computer to perform any of claims 1-12.
